# EUROPEAN PATENT APPLICATION

(11) **EP 4 621 448 A1**
(43) Date of publication of application: **24.09.2025**
(21) Application number: 24164452.5
(22) Date of filing: 19.03.2024
(51) Int. Cl.: G01V 8/14, G01J 1/04

(54) **DETECTING MIRROR WITH POLARISATION**

(71) Applicant: Koninklijke Philips N.V., 5656 AG Eindhoven (NL)
(72) Inventor: VAN DEN DUNGEN, Wilhelmus Andreas Marinus Arnoldus Maria, Eindhoven (NL)
(74) Representative: Philips Intellectual Property & Standards

(57) **Abstract**

Proposed concepts thus aim to provide schemes, solutions, concepts, designs, methods and systems pertaining to detecting the presence of a mirror. In particular, embodiments aim to provide a system for detecting the presence of a mirror by analysing measured polarised light. This is because shiny surfaces, e.g., mirrors, will polarise unpolarised light if they hit the mirror at or close to Brewster's angle. The presence of polarised light can thus be used to infer the presence of a mirror. In other words, it is proposed that by measuring incoming light of at least one polarity (i.e., at least light polarised in a certain direction), the presence of a mirror can be detected. This is because mirrors are capable of polarising unpolarised light from natural light or room lights, and thus the presence of polarised light can be used to detect the presence of a mirror.

## Description

### FIELD OF THE INVENTION

This invention relates to the field of detecting mirrors.

### BACKGROUND OF THE INVENTION

Inspired by the lack of location information in smart home eco systems, and as homes and devices become smarter, interaction models that enable new use cases are becoming possible. Especially with open standards like Matter, different interaction combinations become realistic for devices, including personal care devices. For example, lighting settings can be optimized for specific personal care routines, personal care onset can be detected, and smart mirror displays can be interacted with.

In modern smart homes, it is expected that more smart home devices will enter homes, and for example, be used during a personal care routine in front of a mirror. Smart lights, smart mirrors, air conditioners, and a vast array of personal care devices can be used to work together to optimize the personal care routine and user experience.

All these devices need to be setup and optimized, and not only their own settings need to be set, but also those of the surrounding smart devices used during the routine. A mirror (smart or not) is likely to be a centrally important device during a personal care routine and next to / in front of the user while they are performing the personal care routine. Furthermore, a variety of devices can use the mirror to view a user and/or themselves from another angle, or to more accurately map a room. However, in order to utilize a mirror for any purpose, the mirror must first be detected.

### SUMMARY OF THE INVENTION

The invention is defined by the claims.

According to examples in accordance with an aspect of the invention, there is provided a system for detecting the presence of a mirror.

The system comprises: an optical sensor arrangement configured to measure incoming light of at least one polarity and to generate polarisation data describing an intensity of the light of the at least one polarity based on the measured incoming light; and a processor configured to: analyse the polarisation data; and detect the presence of a mirror based on the analysis result.

Proposed concepts thus aim to provide schemes, solutions, concepts, designs, methods and systems pertaining to detecting the presence of a mirror. In particular, embodiments aim to provide a system for detecting the presence of a mirror by analysing measured polarised light. This is because shiny surfaces, e.g., mirrors, will polarise unpolarised light if they hit the mirror at or close to Brewster's angle. The presence of polarised light can thus be used to infer the presence of a mirror.

In other words, it is proposed that by measuring incoming light of at least one polarity (i.e., at least light polarised in a certain direction), the presence of a mirror can be detected. This is because mirrors are capable of polarising unpolarised light from natural light or room lights, and thus the presence of polarised light can be used to detect the presence of a mirror. As will be described, this concept can be expanded on to improve its reliability and accuracy.

By using an optical sensor arrangement capable of measuring incoming light of at least one polarity, an efficient and effective manner of being able to detect the presence of a mirror is provided. The detected mirror can then be used for a variety of purposes, for example, to reliably sense a personal care routine via the mirror, or to initiate the onset of a personal care routine.

The inventors have realised that in order to detect a mirror, a system only needs to include a relatively inexpensive and simple optical sensor arrangement capable of measuring incoming light polarised in at least one direction. An external or internal processor can then be used to analyse the polarisation data in order to efficiently and effectively detect the presence of a mirror. This would be particularly useful in the field of personal care devices which are often used in front of a mirror.

In some embodiments, the optical sensor arrangement may be configured to measure light of at least two different polarities, and wherein the polarisation data may describe an intensity of the light of each of the at least two different polarities. This may allow the optical sensor arrangement to detect more polarised light, i.e., light of a second polarity as well as light of a first polarity. The system may then be capable of more reliably detecting the presence of mirrors by being more likely to detect any light which the mirror has polarised.

In some embodiments, the optical sensor arrangement may comprise a first optical sensor and a second optical sensor, wherein the first optical sensor may comprise a first polarisation filter configured to only pass through light of a first angle of polarisation and the second optical sensor may comprise a second polarisation filter configured to only pass through light of a second angle of polarisation, wherein the first angle of polarisation may be different to the second angle of polarisation. This provides a structurally simple and relatively inexpensive way to measure light of at least two different polarities.

In some embodiments, the second angle of polarisation may be ±90 degrees from the first angle of polarisation. This allows light of both horizontal and vertical polarisations (relative to one another) to be measured, particularly useful as the typical positioning of mirrors within a building will result in the mirror horizontally and/or vertically polarising unpolarised light, e.g., from windows and/or ceiling lights respectively.

In some embodiments, the optical sensor arrangement may comprise a polarimeter. A polarimeter facilitates precise and quantitative detection of polarised light, enabling measurements of light of a plurality of different polarities.

In some embodiments, analysing the polarisation data may comprise comparing the intensity of the measured incoming light of each of the at least one polarity to a predetermined threshold. This may improve the reliability of the system, such that stray polarised light or erroneously measured polarised light does not trigger the detection of the presence of a mirror.

In some embodiments, the system may further comprise a light source configured to emit polarised light of a first polarity; wherein analysing the polarisation data may comprise determining a polarity of the measured incoming light; and wherein detecting the presence of a mirror may be further based on a relationship between the first polarity and the determined polarity. In this way, the system may not be reliant on external unpolarised light sources, such as natural light through a window or a ceiling light. A mirror will reverse the polarisation of either linear or circularly polarised light, and this reversal can thus be measured to detect the presence of a mirror.

In some embodiments, the optical sensor arrangement may be further configured to measure incoming unpolarised light, and wherein analysing the polarisation data may comprise comparing the intensity of the measured incoming light of each of the at least one polarity to the intensity of the incoming unpolarised light. In this way, the detection of a mirror may be made more accurate/reliable as it can be ensured that unpolarised light is also present in an expected ratio to the polarised light, e.g., that the polarised light isn't just from a polarised light source.

In some embodiments, the optical sensor arrangement may be configured to measure the incoming light of the at least one polarity from each of two different angles. In this way, the system may be able to detect polarised light from a wider range of angles and thus detect a mirror in a wider range of circumstances, e.g., without having to be orientated directly towards the mirror.

In some embodiments, analysing the polarisation data may comprise comparing the measured incoming light of the two different angles respectively. In this way, if incoming light from one angle contains polarised light and incoming light from the other angle does not, then the presence of a distinct mirror on a typical non-shiny wall may be detected rather than, for example, a large shiny wall which results in polarised light from all angles.

In some embodiments, the processor may be further configured to determine a position of the detected mirror relative to the optical sensor arrangement based on the analysis result. For example, if incoming light from one angle contains polarised light and incoming light from the other angle does not, then the mirror can be inferred to be positioned in the direction of the incoming polarised light.

In some embodiments, the optical sensor arrangement may be configured to, when movement of the optical sensor arrangement is sensed, measure the incoming light at two distinct points in time. This for example, may essentially function as measuring incoming light from each of at least two different angles, and thus the same benefits can be derived while only requiring an optical sensor arrangement capable of measuring incoming light from a single angle.

In some embodiments, the system may comprise a device, wherein the device may comprise the optical sensor arrangement. In this way, a device is provided capable of detecting the presence of a mirror - information which the device may then want to utilise in further processes.

In some embodiments, the device may be a personal care device. Personal care devices are often used in front of mirrors, and smart personal care devices may desire to use a mirror to observe a user and/or itself during a personal care routine.

In some embodiments, the device may comprise the processor. This may allow the device to detect the presence of a mirror independently and without need for any external connections.

In some embodiments, the device may comprise a motion sensor configured to sense movement of the device. In this way, when the device also comprises the optical sensor arrangement, the motion sensor can sense movement of the optical sensor arrangement.

In some embodiments, analysing the polarisation data may comprise comparing the measured incoming light of the two distinct points in time.

In some embodiments, the two distinct points in time may be separated by less than a predetermined maximum period.

According to another aspect of the invention, there is provided a method for detecting the presence of a mirror. The method comprising measuring incoming light of at least one polarity; generating polarisation data describing an intensity of the light of the at least one polarity based on the measured incoming light; analysing the polarisation data; and detecting the presence of a mirror based on the analysis result.

According to another aspect of the invention, there is provided a computer program comprising code means for implementing the method of any herein disclosed method when said program is run on a processing system.

Thus, there may be proposed concepts for detecting the presence of a mirror, and this may be done based on analysis of measured polarised light.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1A is a simplified block diagram of a system for detecting the presence of a mirror according to a proposed embodiment;
Fig. 1B is a simplified block diagram of a system for detecting the presence of a mirror according to a proposed embodiment;
Fig. 2 is a block diagram of a system for detecting the presence of a mirror according to a proposed embodiment;
Fig. 3 is a block diagram of a system for detecting the presence of a mirror according to a proposed embodiment;
Fig. 4 is a block diagram of a system for detecting the presence of a mirror according to a proposed embodiment;
Fig. 5 is a block diagram of a system for detecting the presence of a mirror according to a proposed embodiment;
Fig. 6 is a block diagram of a system for detecting the presence of a mirror according to a proposed embodiment;
Fig. 7 is a simplified flow diagram of a method for detecting the presence of a mirror according to a proposed embodiment; and
Fig. 8 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to detecting the presence of a mirror. According to proposed concepts, a number of possible solutions may be implemented separately or jointly. That is, although these possible solutions may be described below separately, two or more of these possible solutions may be implemented in one combination or another.

Embodiments of the invention aim to provide a system for detecting the presence of a mirror. This can be achieved by analysing measured polarised light. This is because shiny surfaces, e.g., mirrors, will polarise unpolarised light if they hit the mirror at or close to Brewster's angle. The presence of polarised light can thus be used to infer the presence of a mirror.

In other words, it is proposed that by measuring incoming light of at least one polarity (i.e., at least light polarised in a certain direction), the presence of a mirror can be detected. This is because mirrors are capable of polarising unpolarised light from natural light or room lights, and thus the presence of polarised light can be used to detect the presence of a mirror.

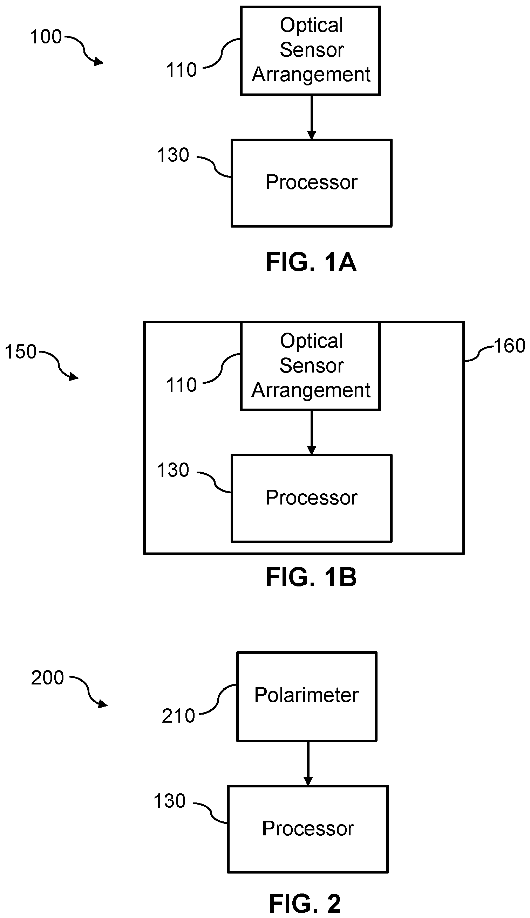

Referring now to Fig. 1A, there is depicted a simplified block diagram of a system 100 for detecting the presence of a mirror according to a proposed embodiment.

The system 100 comprises an optical sensor arrangement 110 and a processor 130. The optical sensor arrangement 110 is configured to measure incoming light of at least one polarity and to generate polarisation data describing an intensity of the light of the at least one polarity based on the measured incoming light. Polarity can be understood as a direction or angle of polarisation. The optical sensor arrangement 110 is therefore configured measure at least incoming light of one angle of polarisation. Polarisation data can be understood as data that describes an intensity of the incoming light of the at least one polarity. If the optical sensor arrangement 110 is configured to measure incoming light of more than one polarity, for example, then the polarisation data can be understood as data that describes an intensity of the incoming light of each polarity respectively. Depending on the exact nature of the optical sensor arrangement 110, the polarisation data can be a direct readout from the optical sensor(s), or the data can undergo some processing by the optical sensor arrangement before being output. Polarisation data can thus also be referred to as measurement data.

The processor 130 is configured to analyse the polarisation data generated by the optical sensor arrangement 110 and then detect the presence of a mirror based on the analysis result. In a simple example, if the polarisation data describes the presence of any polarised light (i.e., an intensity above zero/background), then the presence of a mirror can be detected.

In some embodiments, the optical sensor arrangement 110 can comprise a wide angle, rotatable and/or tiltable optical sensor arrangement such that measurements of light can be taken from a wider range of angles. In some embodiments, the optical sensor arrangement 110 can comprise a full 180 degrees optical sensor array and/or a scanning optical sensor array.

In this embodiment, the processor 130 is configured to analyse the polarisation data by comparing the intensity of the measured incoming light of each of the at least one polarity to a predetermined threshold. This improves the reliability of the system, such that stray polarised light or erroneously measured polarised light does not trigger the detection of the presence of a mirror. The skilled person would be able to set the predetermined threshold at a suitable value for this purpose without any undue burden.

When unpolarised light hits a shiny surface, e.g., a mirror, at Brewster's angle, it undergoes a phenomenon called polarisation by reflection. Unpolarised light consists of waves oscillating in all possible directions perpendicular to its direction of propagation. When this unpolarised light strikes a mirror at Brewster's angle, two key things happen: the light that is polarised parallel to the plane of incidence (p-polarised light) is preferentially transmitted through the surface; and the light that is polarised perpendicular to the plane of incidence (s-polarised light) is preferentially reflected.

As a result, the light that is reflected off the surface becomes partially polarised, with its electric field oscillating predominantly in the plane parallel to the surface. The degree of polarisation depends on the angle of incidence; at Brewster's angle, the reflected light is entirely polarised perpendicular to the plane of incidence.

When unpolarised light hits a shiny surface close to Brewster's angle but not exactly at it, there will still be partial polarisation of the reflected light, but it may not be as complete as at Brewster's angle itself. In other words, at angles close to Brewster's angle, there will still be a preference for the polarisation state parallel to the plane of incidence (p-polarised light) in the transmitted light and perpendicular to the plane of incidence (s-polarised light) in the reflected light. However, the degree of polarisation in the reflected light will not be as strong as at Brewster's angle. Some unpolarised light will still be reflected along with the partially polarised light. As the angle of incidence deviates further from Brewster's angle, the degree of polarisation in the reflected light decreases, and eventually, at angles far from Brewster's angle, the reflected light will have a mixture of both polarisation states, and the degree of polarisation will be lower.

This phenomenon can thus be used to detect the presence of mirrors via the detection of polarised light in an environment in which polarised light would not normally be expected, e.g., in a typical home. Furthermore, for example, in a bathroom, light sources are typically either horizontal from mirrors at a similar height (e.g., a window) or above a mirror (ceiling light), and thus light from these sources will hit the mirror at or close to Brewster's angle thus resulting in measurable polarised light.

For instance, in this embodiment, the optical sensor arrangement 110 is, in fact, configured to measure light of at least two different polarities, i.e., measure light of at least two different angles of polarisation. The polarisation data will thus describe an intensity of the light of each of the at least two different polarities. This allows the optical sensor arrangement 110 to detect more polarised light, i.e. light of a second polarity as well as light of a first polarity. The system 100 can then be capable of more reliably detecting the presence of mirrors by being more likely to detect any light which the mirror has polarised, regardless of the angle of polarisation. This, of course, is not essential as the skilled person would understand, but merely improves the accuracy and/or reliability of the system 100.

Thus, in this embodiment, the processor 130 is configured to analyse the polarisation data by comparing the intensity of the measured incoming light of each of the at least two polarities to a predetermined threshold. This concept, of course, can be extended to incoming light of any number of different polarities, as would be understood by the skilled person.

In this embodiment, the optical sensor arrangement 110 is also configured to measure incoming unpolarised light, and the processor's 130 analysis of the polarisation data further comprises comparing the intensity of the measured incoming light of each of the at least one polarity to the intensity of the incoming unpolarised light. In this way, the detection of a mirror can be made more accurate/reliable as it can be ensured that unpolarised light is also present in an expected ratio (within an expected range) to the polarised light, e.g., that the polarised light isn't just from a polarised light source. This feature is not essential to the working of the invention, however, as would be understood by the skilled person.

Being able to detect that a device, e.g., a personal care device, is in front of a mirror enables a myriad of use case optimisations. For example, settings for smart lights could be optimised for a specific personal care routine if the corresponding personal care device detects that it is in front of a mirror; onset of personal care can be detected; and/or if the mirror is a smart mirror, it can then appropriately interact with the personal care device and the user. These are provided purely as a few examples and the skilled person would understand that the detection of a mirror could be used for a wide array of purposes. For example, it could be used to improve the accuracy of motion sensors.

Referring now to Fig. 1B, there is depicted a simplified block diagram of a system 150 for detecting the presence of a mirror according to a proposed embodiment. This embodiment is substantially the same as that described in Fig. 1A, with the optical sensor arrangement 110 and the processor 130 being substantially the same as those described in relation to system 100, however, in this embodiment, there is further provided a device 160 which comprises both the optical sensor arrangement 110 and the processor 130. In this way, a device 160 is provided capable of detecting the presence of a mirror - information which the device 160 may then want to utilise in further processes.

In this embodiment, the device 160 comprises the processor 130 as well as the optical sensor arrangement, however, in other embodiments, the processor 130 can be external to the device 160. For instance, in these embodiments, the processor 130 can be provided with the polarisation data by a wired or wireless connection, as would be understood by the skilled person. For example, the processor 130 can be situated in a smart device already owned by a user, such as a smartphone or tablet, or it can be situated in the cloud. Having the device 160 comprise the processor 130, however, allows the device to detect the presence of a mirror independently and without need for any external connections. In the case where the device 160 comprises all the components of the system 150, the system 150 can then essentially be thought of as the device 160.

In some embodiments, the device 160 can be a personal care device. Personal care devices are often used in front of mirrors, and smart personal care devices may desire to use a mirror to observe a user and/or itself during a personal care routine. For instance, a personal care device can comprise at least one of: a toothbrush; an electric shaver/razor; a hair dryer; a hair straightener/flat iron; a hair curler; an epilator; an electric nail file; a facial cleansing brush; a facial steamer; a blackhead remover; a manicure and pedicure set; an electric foot file; an electric callus remover; a scalp massager; an electric facial hair trimmer; a water flosser; a facial toning device; a skin tightening device; an anti-aging LED mask; an electric body massager. In other embodiments, however, the device 160 can comprise at least one of: gym equipment; an augmented reality headset; a virtual reality headset; a security device; a robotic device; a cleaning device; a vehicle; an android; and any other suitable device which might benefit from being able to detect the presence of a mirror, as would be understood by the skilled person.

In an example, a personal care device (a shaver) is being used in front of a mirror (e.g., a smart or non-smart mirror) in a bathroom. The shaver has an integrated optical sensor arrangement with a polarising filter in the back of the shaver facing the mirror configured to measure incoming light of one polarity and also configured to measure skin properties of the user via the mirror. Before the shaver starts measuring the skin properties of the user, however, it must know that the device and user are in front of a mirror. The mirror's shiny glass surface will polarise unpolarised light sources. The closer the light source is seen via the mirror surface to Brewster's angle, the higher the polarisation will be and thus the higher the intensity measured by the optical sensor arrangement will be. The sensor arrangement of the shaver can thus measure the incoming light of one polarity, generate polarisation data describing an intensity of polarised light, and then either send this polarisation data to an external processor or to an internal processor. The processor can then analyse the polarisation data and thus detect the presence of a mirror based on the analysis result, e.g., if the polarisation data describes that the incoming polarised light is above a predetermined threshold, then a mirror is detected.

Referring now to Fig. 2, there is depicted a block diagram of a system 200 for detecting the presence of a mirror according to a proposed embodiment.

In this embodiment, the optical sensor arrangement comprises a polarimeter 210. A polarimeter facilitates precise and quantitative detection of polarised light, enabling measurements of light of a plurality of different polarities.

For example, a polarimeter typically includes a polariser and an analyser and by rotating either of these while measuring incoming light, changes in the intensity can thus be used to infer the polarity of the incoming light. Advancements in technology have enabled the development of miniaturized and portable polarimeters which have dimensions on the order of a few centimetres to a few tens of centimetres. They often utilize microelectromechanical systems (MEMS), integrated optics, or microfluidic components to achieve miniaturization while maintaining performance. A polarimeter could thus be easily integrated into a system or device for the present purpose.

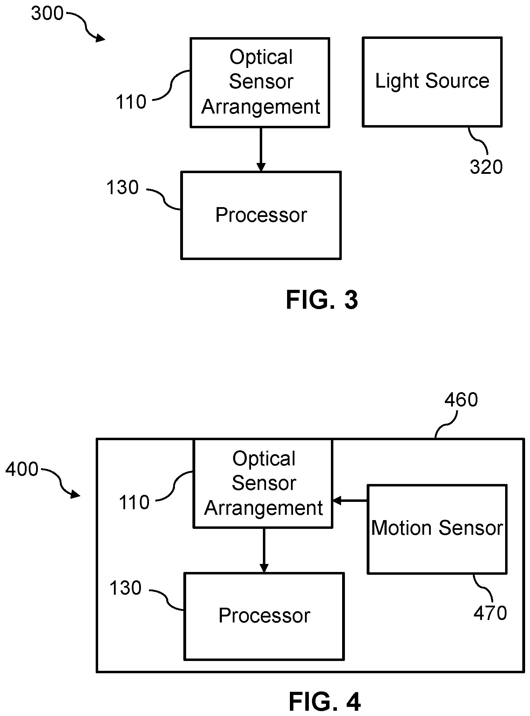

Referring now to Fig. 3, there is depicted a block diagram of a system 300 for detecting the presence of a mirror according to a proposed embodiment.

In this embodiment, the system 300 further comprises a light source 320. The light source 320 is configured to emit polarised light of a first polarity. This light can be linearly polarised or circularly polarised, for example.

In this embodiment, analysing the polarisation data thus comprises the processor 130 determining a polarity of the measured incoming light; and detecting the presence of a mirror is further based on a relationship between the first polarity and the determined polarity. In this way, the system 300 is not reliant on external unpolarised light sources, such as natural light through a window or a ceiling light. A mirror will reverse the polarisation of either linear or circularly polarised light, and this reversal can thus be measured to detect the presence of a mirror. To be clear, the processor 130 can thus be configured to detect the presence of a mirror if the determined polarity of the measured incoming light is found to be the opposite / reverse of the first polarity, i.e., opposite to the polarity of the light emitted by the light source 320.

It should be noted that in embodiments in which the light source 320 is configured to emit circularly polarised light, the optical sensor arrangement 110 needs to be configured to measure light of at least two different polarities. This is required to measure the direction of rotation (e.g., handedness) of circularly polarised light. A mirror will reverse the direction or rotation (e.g., handedness) of any light it reflects.

Referring now to Fig. 4, there is depicted a block diagram of a system 400 for detecting the presence of a mirror according to a proposed embodiment. The system 400 comprises a device 460 and the device 460 comprises an optical sensor arrangement 110, a processor 130, and a motion sensor 470. The motion sensor is configured to sense movement of the device 460, and thus also of the optical sensor arrangement 110. For instance, the motion sensor can comprise at least one of: an inertial measurement unit (IMU); an accelerometer; a tilt sensor; a magnetometer; and a gyroscope.

In this embodiment, the optical sensor arrangement 110 is configured to, when movement of the optical sensor arrangement is sensed (via the motion sensor 470), measure incoming light at two distinct points in time.

In this embodiment, the processor 130 analysing the polarisation data comprises comparing the measured incoming light of the two distinct points in time. In this way, if incoming light at one time contains polarised light and incoming light at another time does not, then the presence of a distinct mirror can be detected rather than, for example, a shiny wall surrounding the device. In other words, this difference in the measurement of the intensity of polarised light at two different times can indicate the presence of a distinct mirror which will polarise reflected light in contrast to typical non-shiny, non-reflective, and thus non-polarising wall surfaces. This information can also be used by the processor 130 to determine a position of the detected mirror relative to the device 460 (and thus the optical sensor arrangement 110). For example, if incoming light at one time contained polarised light and incoming light from another time did not, then the mirror can be inferred to be positioned in the direction that the optical sensor arrangement 110 was facing at the time the incoming light contained polarised light.

This embodiment, for example, may thus essentially function equivalently to measuring incoming light from each of at least two different angles (as will be later described), and thus the same benefits can be derived while only requiring an optical sensor arrangement 110 capable of measuring incoming light from a single angle.

It should also be noted that in embodiments where the optical sensor arrangement 110 is configured to, when movement of the optical sensor arrangement is sensed, measure the incoming light at two distinct points in time, that the system 400 or device 460 need not always comprise a motion sensor. In other embodiments, any suitable method of sensing movement of the optical sensor arrangement can be used as would be understood by the skilled person. For example, motion could be sensed directly by the optical sensor arrangement based on the optical sensor arrangement's view changing or via an external camera tracking the position of the optical sensor arrangement.

This concept described above, of course, can be extended to incoming light at any number of distinct points in time, as would be understood by the skilled person. In some embodiments, the points in time should be separated by less than a predetermined maximum period, e.g., 10 seconds, 20 seconds, 30 seconds, 40 seconds, 50 seconds, 60 seconds, such that the lighting environment is likely to stay consistent during the movement.

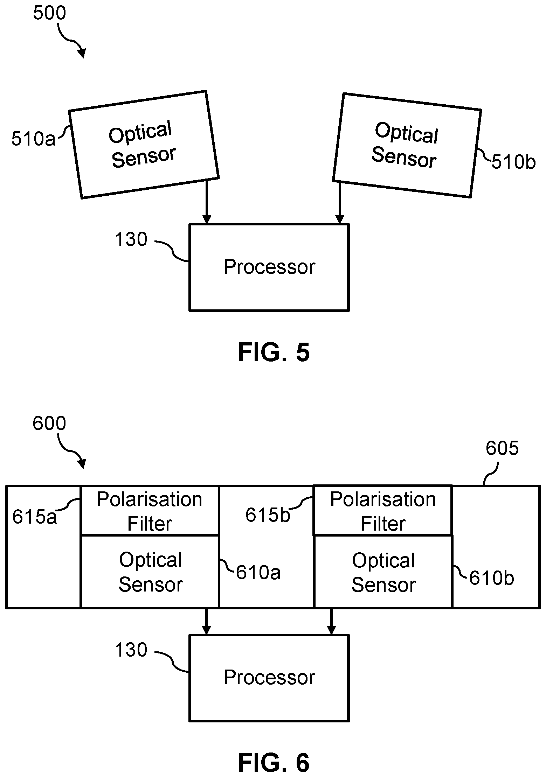

Referring now to Fig. 5, there is depicted a block diagram of a system 500 for detecting the presence of a mirror according to a proposed embodiment.

In this embodiment, the optical sensor arrangement comprises two optical sensors, 510a and 510b. This enables the optical sensor arrangement to be able to measure the incoming light of the at least one polarity from each of two different angles. In this way, the system can detect polarised light from a wider range of angles and thus detect a mirror in a wider range of circumstances, e.g., without having to be orientated in a specific direction. This concept, of course, can be extended to incoming light of any number of different angles, using any number of different optical sensors and/or rotating/tiltable optical sensors, as would be understood by the skilled person.

In this embodiment, the processor's 130 analysis of the polarisation data thus comprises comparing the measured incoming light of the two different angles respectively. In this way, if incoming light from one angle contains polarised light and incoming light from the other angle does not, then the presence of a distinct mirror on a typical non-shiny wall can be detected rather than, for example, a large shiny wall which would result in polarised light in all directions.

Further, in this embodiment, the processor 130 is configured to determine a position of the detected mirror relative to the optical sensor arrangement based on the analysis result. For example, if incoming light from one angle contains polarised light and incoming light from the other angle does not, then the mirror can be inferred to be positioned in the direction of the incoming polarised light. Of course, this feature is not essential to the working of the invention.

Referring now to Fig. 6, there is depicted a block diagram of a system 600 for detecting the presence of a mirror according to a proposed embodiment. In this embodiment, a device 605 comprises the optical sensor arrangement, and the optical sensor arrangement comprises two optical sensors, 610a and 610b, each optical sensor with their own polarisation filter, 615a and 615b. The first polarisation filter 615a is configured to only pass through light of a first angle of polarisation and the second polarisation filter 615b is configured to only pass through light of a second, different angle of polarisation. This provides a structurally simple and relatively inexpensive way to measure light of at least two different polarities, which facilitates more reliable detection of the presence of mirrors by being more likely to detect any light which the mirror has polarised (as compared to only measuring light of a single polarity).

Further, by facilitating the rotation of the polarisation filters, the direction of polarisation of any light can be determined/measured, as would be understood by the skilled person. For example, by systematically rotating either or both of the polarization filters while measuring the intensity of transmitted light, it becomes possible to identify the orientation at which maximum and minimum intensities occur. Through this process, the direction of polarization of the incoming light can be deduced, and thus the intensity of light of any polarity can be measured.

In this embodiment, the second angle of polarisation is ±90 degrees from the first angle of polarisation. This allows light of both horizontal and vertical polarisations (relative to one another) to be measured, particularly useful as the typical positioning of mirrors within a building will result in the mirror horizontally and/or vertically polarising unpolarised light, e.g., from windows and/or ceiling lights respectively.

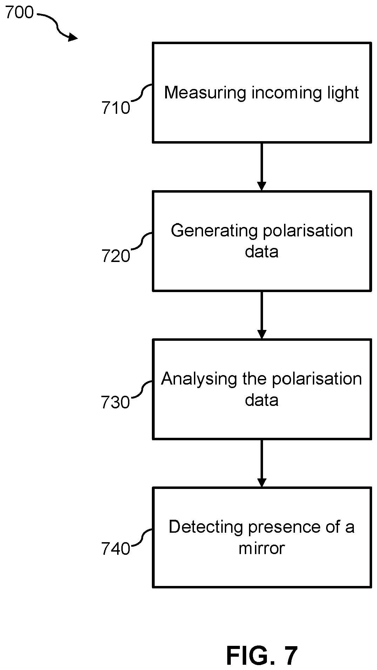

Referring now to Fig. 7, there is depicted a simplified flow diagram of a method 700 for detecting the presence of a mirror according to a proposed embodiment.

The method starts with step 710 of measuring incoming light of at least one polarity. Step 720 comprises generating polarisation data describing an intensity of the light of the at least one polarity based on the measured incoming light. Step 730 comprises analysing the polarisation data. Step 740 comprises detecting the presence of a mirror based on the analysis result. For example, steps 710 and 720 can be performed by an optical sensor arrangement according to any herein described embodiment, and steps 730 and 740 can be performed by a processor according to any herein described embodiment.

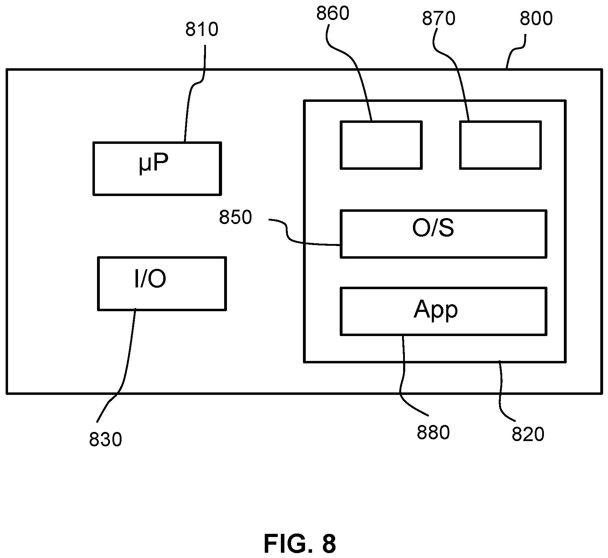

Fig. 8 illustrates an example of a computer 800 within which one or more parts of an embodiment may be employed. Various operations discussed above may utilize the capabilities of the computer 800. In this regard, it is to be understood that system functional blocks can run on a single computer or may be distributed over several computers and locations (e.g. connected via internet).

The computer 800 includes, but is not limited to, PCs, workstations, laptops, PDAs, palm devices, servers, storages, and the like. Generally, in terms of hardware architecture, the computer 800 may include one or more processors 810, memory 820 and one or more I/O devices 830 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 810 is a hardware device for executing software that can be stored in the memory 820. The processor 810 can be virtually any custom made or commercially available processor, a central processing unit (CPU), a digital signal processor (DSP), or an auxiliary processor among several processors associated with the computer 800, and the processor 810 may be a semiconductor based microprocessor (in the form of a microchip) or a microprocessor.

The memory 820 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 820 may incorporate electronic, magnetic, optical, and/or other types of storage media. Note that the memory 820 can have a distributed architecture, where various components are situated remote from one another, but can be accessed by the processor 810.

The software in the memory 820 may include one or more separate programs, each of which comprises an ordered listing of executable instructions for implementing logical functions. The software in the memory 820 includes a suitable operating system (O/S) 850, compiler 860, source code 870, and one or more applications 880 in accordance with exemplary embodiments. As illustrated, the application 880 comprises numerous functional components for implementing the features and operations of the exemplary embodiments. The application 880 of the computer 800 may represent various applications, computational units, logic, functional units, processes, operations, virtual entities, and/or modules in accordance with exemplary embodiments, but the application 880 is not meant to be a limitation.

The operating system 850 controls the execution of other computer programs, and provides scheduling, input-output control, file and data management, memory management, and communication control and related services. It is contemplated by the inventors that the application 880 for implementing exemplary embodiments may be applicable on all commercially available operating systems.

Application 880 may be a source program, executable program (object code), script, or any other entity comprising a set of instructions to be performed. When a source program, then the program is usually translated via a compiler (such as the compiler 860), assembler, interpreter, or the like, which may or may not be included within the memory 820, so as to operate properly in connection with the O/S 850. Furthermore, the application 880 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 830 may include input devices such as, for example but not limited to, a mouse, keyboard, scanner, microphone, camera, etc. Furthermore, the I/O devices 830 may also include output devices, for example but not limited to a printer, display, etc. Finally, the I/O devices 830 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 830 also include components for communicating over various networks, such as the Internet or intranet.

If the computer 800 is a PC, workstation, intelligent device or the like, the software in the memory 820 may further include a basic input output system (BIOS) (omitted for simplicity). The BIOS is a set of essential software routines that initialize and test hardware at start-up, start the O/S 850, and support the transfer of data among the hardware devices. The BIOS is stored in some type of read-only-memory, such as ROM, PROM, EPROM, EEPROM or the like, so that the BIOS can be executed when the computer 800 is activated.

When the computer 800 is in operation, the processor 810 is configured to execute software stored within the memory 820, to communicate data to and from the memory 820, and to generally control operations of the computer 800 pursuant to the software. The application 880 and the O/S 850 are read, in whole or in part, by the processor 810, perhaps buffered within the processor 810, and then executed.

When the application 880 is implemented in software it should be noted that the application 880 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 880 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The systems of Figs. 1 to 6, and the method of Fig. 7, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 8 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A system (100) for detecting the presence of a mirror, the system comprising:
an optical sensor arrangement (110) configured to measure incoming light of at least one polarity and to generate polarisation data describing an intensity of the light of the at least one polarity based on the measured incoming light; and
a processor (130) configured to:
analyse the polarisation data; and
detect the presence of a mirror based on the analysis result.

2. The system of claim 1, wherein the optical sensor arrangement (110) is configured to measure light of at least two different polarities, and wherein the polarisation data describes an intensity of the light of each of the at least two different polarities.

3. The system of claim 2, wherein the optical sensor arrangement comprises a first optical sensor (610a) and a second optical sensor (610b), wherein the first optical sensor comprises a first polarisation filter (615a) configured to only pass through light of a first angle of polarisation and the second optical sensor comprises a second polarisation filter (615b) configured to only pass through light of a second angle of polarisation, wherein the first angle of polarisation is different to the second angle of polarisation.

4. The system of claim 3, wherein the second angle of polarisation is ±90 degrees from the first angle of polarisation.

5. The system of claim 1 or 2, wherein the optical sensor arrangement comprises a polarimeter (210).

6. The system of any of claims 1 to 5, wherein analysing the polarisation data comprises comparing the intensity of the measured incoming light of each of the at least one polarity to a predetermined threshold.

7. The system of any of claims 1 to 6, wherein the system further comprises:
a light source (320) configured to emit polarised light of a first polarity;
wherein analysing the polarisation data comprises determining a polarity of the measured incoming light; and
wherein detecting the presence of a mirror is further based on a relationship between the first polarity and the determined polarity.

8. The system of any of claims 1 to 7, wherein the optical sensor arrangement (110) is further configured to measure incoming unpolarised light, and wherein analysing the polarisation data comprises comparing the intensity of the measured incoming light of each of the at least one polarity to the intensity of the incoming unpolarised light.

9. The system of any of claims 1 to 8, wherein the optical sensor arrangement (110) is configured to measure the incoming light of the at least one polarity from each of two different angles.

10. The system of claim 9, wherein analysing the polarisation data comprises comparing the measured incoming light of the two different angles respectively, and preferably, wherein the processor is further configured to determine a position of the detected mirror relative to the optical sensor arrangement based on the analysis result.

11. The system of any of claims 1 to 10, wherein the optical sensor arrangement (110) is configured to, when movement of the optical sensor arrangement is sensed, measure the incoming light at two distinct points in time.

12. The system of any of claims 1 to 11, wherein the system comprises a device (160), and wherein the device comprises the optical sensor arrangement (110), and preferably wherein the device is a personal care device.

13. The system of claim 12, wherein the device (160) further comprises the processor (130).

14. A computer-implemented method (700) for detecting the presence of a mirror, the method comprising:
measuring incoming light of at least one polarity (710)
generating polarisation data (720) describing an intensity of the light of the at least one polarity based on the measured incoming light;
analysing the polarisation data (730); and
detecting the presence of a mirror (740) based on the analysis result.

15. A computer program product comprising computer program code means which, when executed on a computing device having a processing system, cause the processing system to perform all of the steps of the computer-implemented method according to claim 14.
